# EUROPEAN PATENT SPECIFICATION

(11) **EP 1 323 150 B1**
(45) Date of publication and mention of the grant of the patent: **27.04.2005**
(21) Application number: 01975619.6
(22) Date of filing: 01.10.2001
(51) Int. Cl.: G08G 5/00, G01C 23/00

(54) **DISPLAY OF NON-FLIGHT PLAN WAYPOINTS**
DARSTELLUNG VON NICHT IM FLUGPLAN VORHANDENEN PUNKTEN
AFFICHAGE DE POINTS DE CHEMINEMENT D'UN PLAN AUTRE QU'UN PLAN DE VOL

(30) Priority: 06.10.2000 US 680775
(43) Date of publication of application: 02.07.2003
(73) Proprietor: Honeywell International Inc., Morristown, New Jersey 07960 (US)
(72) Inventor: SNYDER, Mark, I., Glendale, AZ 85306 (US)
(74) Representative: Haley, Stephen
(86) International application number: PCT/US2001/030638
(87) International publication number: WO 2002/031795

(56) References cited:
- EP-A- 1 020 778
- US-A- 5 057 835
- US-A- 6 112 141

## Description

The present invention relates, generally, to aircraft cockpit displays and, more particuarly, to graphical methods for displaying non-flight plan information.

A pilot's awareness and coordination of various aircraft modes and conditions is often critical to optimum aircraft performance and safety. For example, the pilot should be aware of the aircraft's automation state and the pilot should be able to easily coordinate the flight director modes. Moreover, the pilot should be able to easily view and coordinate the tracking of the aircraft to current modes and targets. However, existing cockpit controls, which may be of the panel mounted variety or the head up display (HUD) variety and which may be commonly found in commercial, military, and civilian aircraft, include various systems distributed throughout the cockpit, thereby often req uiring the pilot to intermittently scan various areas of the cockpit to obtain and analyse the aircraft information. As such, pilots may fly certain modes in an inappropriate manner.

Thus, aircraft flight displays continue to advance in sophistication, achieving increasingly higher levels of information density and, consequently, presenting a greater amount of visual information to be perceived and understood by the operator. In many applications, it is important that visual displays provide a proper cognitive mapping between what the operator is trying to achieve and the information available to accomplish the task. As a result, such systems increasingly utilize human-factor design principles in order to build instrumentation and controls that work cooperatively with human operators. Accordingly, the Federal Aviation Administration (FAA) has promulgated a number of standards and advisory circulars relating to flight instrumentation. More particularly, Title 14 of the U.S. Code of Federal Regulations, Federal Aviation Regulations (FAR) Part 25, Sec. 25.1321 et seq. provides guidelines for arrangement and visibility of instruments, warning lights, indicators, and the like. Similarly, detailed guidelines related to electronic displays can be found in FAA Advisory Circular 20-88A, Guidelines on the Marking of Aircraft Powerplant Instruments (Sept. 1985).

One area in particular that has not profited in advances in graphical user interfaces is the field of aircraft flight management systems. Specifically, in current generation aircraft, flight plan review, entry and editing continues to be performed using cumbersome, text-based techniques, such as through Control and Display Units (CDUs), which have not changed significantly over the years. As a result, flight crews frequently complain that current flight management systems (FMS) and their display panels are non-intuitive, difficult to interpret and require too much heads-down time.

While these panels may be used by the pilot to determine the current behavior of the aircraft, a significant amount of interpretation remains to specifically identify the current objectives of the aircraft control system. This interpretation problem is exacerbated because some combinations of annunciations are not exclusive to particular modes of flight In addition, even after the pilot has interpreted the general behavior, behavior specifics may be unascertainable from the display.

For example, waypoints (physical locations, navigation sources and/or the like in the flight plan) are typically located on a map which is displayed on a MFD (Multifunction Display) area which is usually located in a separate display adjacent to the PFD and the CDU which are themselves usually located in the pedestal area of the cockpit. The targets are usually located on their respective scales (speed, altitude, vertical speed, heading, etc.) which are in the PFD (Speed is usually directly to the left of the ADI, Altitude is usually to the right of the ADI, and Vertical Speed is usually in the HSI area or to the right of the Altitude scale) and/or on a Flight Guidance Controller located in the glareshield area of the cockpit.

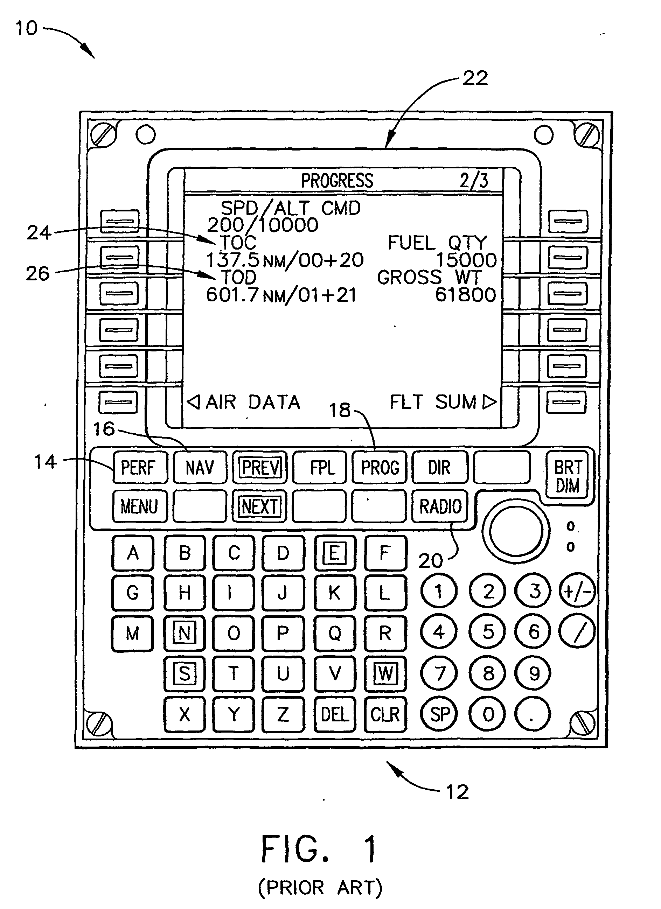

However, non-flight plan waypoints are usually only displayed on the CDU or in a vertical profile display. For example, Figure 1 shows a typical CDU 10. CDU 10 comprises various information display and input functions and devices such as an alphanumeric keypad 12, function keys such as a PERF key 14, a NAV key 16, a PROG key 18, a RADIO key 20 and the like. A CDU display 22 is provided for displaying various information such as speed and altitude, fuel quantity, gross weight and other air data and flight plan summary information. Display 22 typically comprises a display monitor suitable for displaying the various symbols and information such as CRT and flat-panel display systems.

Notably and exemplary of some of the problems discussed above, non-flight plan waypoint information is also often displayed on CDU 10. For example, Figure 1 shows a textual display of a top of climb (TOC) non-flight plan waypoint 24 and a top of descent (TOD) non-flight plan waypoint 26. As illustrated in Figure 1, TOC 24 is located at 137.5 NM/00+20 and TOD 26 is located at 601.7 NM/01+21. Such locations of TOC and TOD information may require the pilot to look away from other display panels and may require the pilot to manually, through use of keypad 12, step through several screens to obtain the desired non-flight plan waypoint information. Moreover, in addition to TOC and TOD points, the display of other non-flight plan waypoints, such as, for example, Step Climbs and the like in the CDU also present similar difficulties.

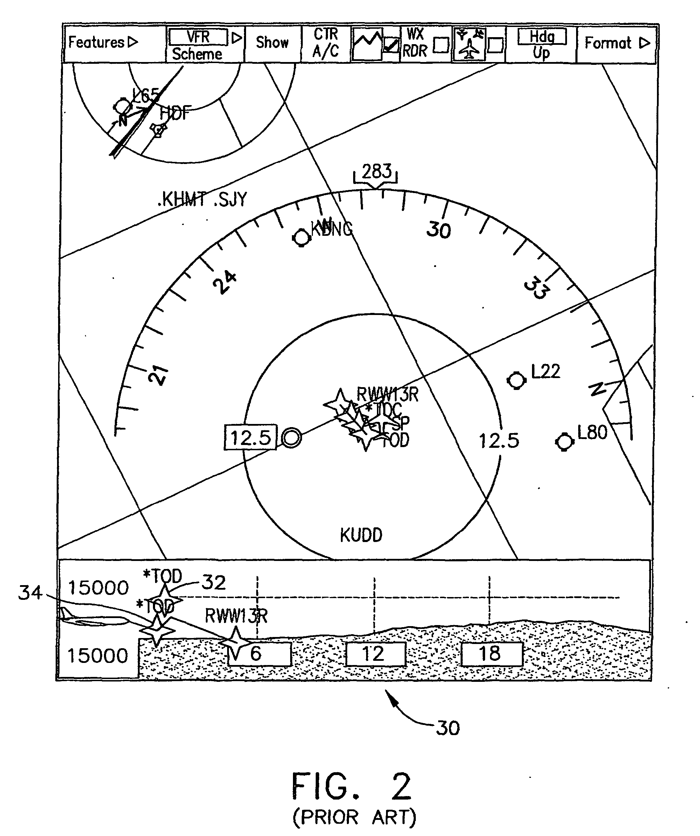

Additionally, as mentioned above, non-flight plan waypoint information may also be displayed in a vertical profile display 30 as illustrated in Figure 2. While displaying such information in vertical profile display 30 can reduce the amount of movement the pilot must go through in order to find the non-flight plan waypoint information, such display can have its own drawbacks. For example, with continuing reference to Figure 2, non-flight plan waypoint data such as TOC 32 and TOD 34 are illustrated. However, only the graphical placement of such points is illustrated. Data which is useful to the pilot relating to these points, (e.g., distance, time, fuel and the like) are not discernible from the graphical representation of these points and the pilot must refer to other sources, such as the CDU, to determine the information.

Thus, while existing displays such as the CDU and vertical profile display can provide efficient control and display of information, the vehicle operator should be Preferably provided with more accurate and timely information to monitor vehicle behaviour and direct overall vehicle operations. As the accuracy and frequency of information provided to the operator is improved, the operator is better able to make informed decisions, resulting in improved vehicle performance. While certain portions of such information can be provided by existing displays, various operational and training issues have been raised, including, but not limited to: discrepancies between a pilot's understanding of the avionics design and actual operation; over-emphasis on the training of required operating procedures and under-emphasis on presenting a model of the actual organization and operation of the avionics system; and the quality and quantity of information presented to the pilot on the avionics displays. These issues are not surprising when the complexity of existing displays is considered in relation to the form and content of the information that is displayed to the flight crew.

There exists a need to address these and other limitations of the prior art. Specifically there is a long felt need for aircraft cockpit displays and graphical methods for displaying non-flight plan information.

US-A-6112141 discloses an apparatus and method for graphically oriented aircraft display and control.

According to a first aspect of the invention, there is provided a system for displaying non-flight plan waypoint information, comprising:
a primary flight display unit having a flight plan data display area divided into at least one array;
a processor coupled to said primary flight display unit, said processor configured to process avionics data and produce flight plan data and non-flight plan data on said primary flight display unit, wherein said non-flight plan data is distinct from said flight plan data,
characterised in that said non-flight plan data is superimposed on said at least one array.

According to a second aspect of the invention, there is provided a method for displaying non-flight plan waypoint information, comprising:
providing a primary flight display unit having a flight plan data display area divided into at least one array;
processing avionics data provided by an FMS to generate a flight plan signal indicative of a flight plan data and a non-flight plan signal indicative of a non-flight plan data;
sending said flight plan signal and said non-flight plan signal to said primary flight display unit;
displaying said flight plan data and non-flight plan data on said primary flight display unit, wherein said non-flight plan data is distinct from said flight plan data,
characterised in that the method further comprises superimposing said non-flight plan data on said at least one array.

The present invention provides systems and methods for an integrated graphical user interface which facilitates the display and editing of non-flight plan information. A user (e.g., a pilot) located within the aircraft provides input to a processor through a cursor control device and receives visual feedback via a display produced by a monitor. The display includes various graphical elements associated with the lateral position, vertical position, flight-plan and/or other indicia of the aircraft's operational state as determined from avionics data and/or various data sources. Through use of the cursor control device, the user may modify the flight-plan and/or other such indicia graphically in accordance with feedback provided by the display. In one embodiment, a multi-function display (MDU) includes non-flight plan data. The non-flight plan data may comprise data such as Top of Climb (TOC), Top of Descent (TOD) and the like displayed in a flight plan way point listing. In accordance with a particular embodiment, the non-flight plan data are not interactive to the user in that they are not targets for graphical flight planning actions or have such constraints associated therewith.

Additional aspects of the present invention will become evident upon reviewing the non-limiting embodiments described in the specification and the claims taken in conjunction with the accompanying figures, wherein like numerals designate like elements, and:
Figure 1 depicts non-flight plan information on an exemplary prior art CDU;
Figure 2 is a display arrangement of a prior art PDU showing non-flight plan waypoint information in a vertical profile display;
Figure 3 is a schematic overview of a user interface in accordance with an exemplary embodiment of the present invention;
Figure 4 is a display arrangement of an exemplary PDU in accordance with one embodiment of the present invention;
Figure 5 is an exemplary vertical profile view in accordance with the present invention; and
Figure 6 is a display arrangement of textually displayed non-flight plan information in accordance with an exemplary embodiment of the present invention.

### DETAILED DESCRIPTION OF EXEMPLARY EMBODIMENTS

The following descriptions are exemplary embodiments only, and are not intended to limit the scope, applicability, or configuration of the invention in any way. Rather, the following description provides a convenient illustration for implementing various embodiments of the invention. Various changes may be made in the function and arrangement of elements described in the preferred embodiments without departing from the spirit and scope of the invention as set forth in the appended claims. In addition, while the following detailed description often refers to non-flight plan waypoint data such as TOCs and TODs, similarly, the display of other non-flight plan waypoint data including Step Climb information and the like are also within the scope of the present invention. Still further, various aspects of the present invention may also be combined with other systems, such as those described in U.S. Patent Application Serial No. 09/660,343, filed September 14, 2000, by Michael J. Gibbs, Mike B. Adams, Jr., Karl L. Chase, Daniel E. Lewis, Daniel E. McCrobie, and Debi Van Omen, entitled METHODS AND APPARATUS FOR GRAPHICAL DISPLAY AND EDITING OF FLIGHT PLANS.

Systems and methods in accordance with the present invention provide an improved graphical user interface for display and editing of aircraft flight plan and non-flight plan data. In this regard, the present invention may be described herein in terms of functional block components and various processing steps. It should be appreciated that such functional blocks may be realized by any number of hardware, firmware, and/or software components configured to perform the specified functions. For example, the present invention may employ various integrated circuit components, e.g., memory elements, digital signal processing elements, look-up tables, and the like, which may carry out a variety of functions under the control of one or more microprocessors or other control devices. Such general techniques and components that are known to those skilled in the art are not described in detail herein.

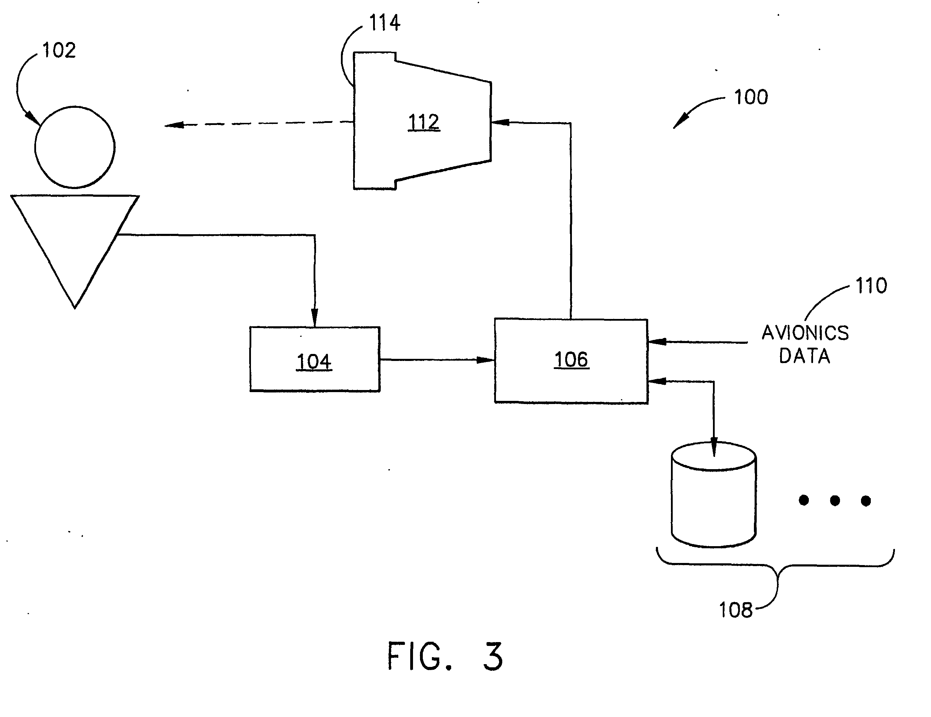

Briefly, referring now to Figure 3, a system 100 in accordance with the present invention comprises a processor 106 configured to communicate with an associated monitor (or monitors) 112, one or more data sources 108, cursor control device 104, and avionics data 110. In general, a user 102 (e.g., a pilot), located within the aircraft (not shown) provides input to processor 106 through cursor control device 104, and receives visual feedback via a display 114 produced by monitor 112. Display 114 includes various graphical elements associated with the lateral position, vertical position, flight plan and non-flight plan and/or other indicia of the aircraft's operational state as determined from avionics data 110 and/or data sources 108.

A number of aspects of display 114 (which are controlled by processor 106 in a practical embodiment) may contribute to the improved contents and appearance of the system, thus increasing the situational awareness of the pilot and/or flight crew. The image generation and display aspects of the present invention may leverage known techniques such that existing systems can be modified in a straightforward manner to support the different features described herein. In a practical implementation, the concepts of the present invention may be realized in the form of revised display generation software or processing resident at processor 106.

Through use of a cunsor control device 104, user 102 may modify and view the flight plan, non-flight plan data and/or other such indicia graphically in accordance with feedback provided by display 114. Cursor control device 104 includes any device suitable to accept input from user 102 and convert that input to a graphical position on display 114. Various joysticks, mice, trackballs, and the like are suitable for this purpose. In one embodiment, cursor control device 104 comprises a touch-pad interface device with a thumb actuation switch on the side. In this embodiment, the user rests his or her hand on a built-in palm-rest to stabilize the hand, position the fingertip for pointing, and position the thumb for clicking.

In accordance with an exemplary embodiment of the present invention, processor 106 encompasses one more functional blocks used to provide flight management and control, interface with cursor control device 104, and drive monitor 112. Processor 106 may include or cooperate with a mode, position and/or detection element that is capable of determining the mode or position of the vehicle relative to one or more reference locations, points, planes, or targets. In addition, processor 106 may be configured to receive, analyze, condition, and process target and/or bearing data associated with the vehicle. In this regard, processor 106 may indude any number of individual microprocessors, flight computers, navigation equipment, memories, storage devices, interface cards, and other standard components known in the art. Moreover, processor 106 may include any number of microprocessor elements, memory elements, power supplies, and other functional components as necessary to support the operation of system 100. In this respect, processor 106 may include or cooperate with any number of software programs or instructions designed to carry out various methods, process tasks, calculations, control functions, and the generation of display signals and other data used by monitor 112. For example, processor 106 may be configured to generate an annunciator associated with the position of the aircraft relative to at least one reference location.

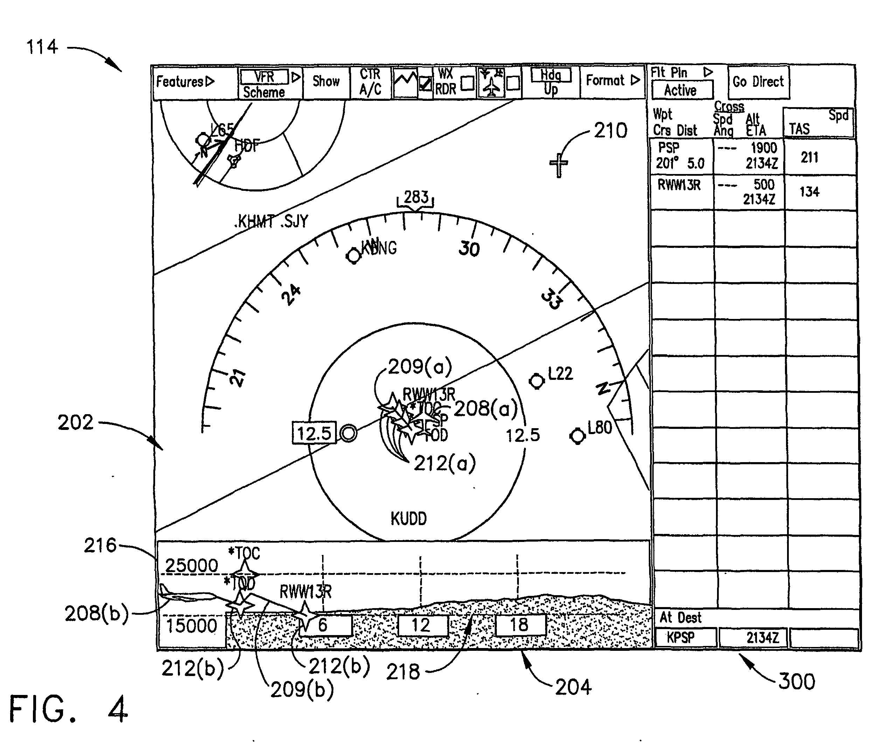

Display 114 preferably includes various graphical elements assoclated with the lateral position, vertical position, flight-plan and non-flight plan data and/or other indicia of the aircraft's operational state as determined from avionics data 110 and/or data sources 108 as provided by processor 106. For example, referring now to Figure 4, a display 114 in accordance with the invention includes a lateral view 202, a vertical profile view (or "vertical profile") 204, and a flight plan text display 300. One skilled in the art will appreciate that the pilot may modify the flight-plan and/or other such indicia graphically in accordance with feedback provided by display 114, however, in accordance with the present invention. various non-flight plan data information may not be modified by, for example, interactive cursor control device 104.

Display 114 may be based on a panel mounted display, a HUD projection, or any known technology. In addition to the enhanced features and indicia described in more detail below, display 114 may include any number of conventional elements, e.g., visual indicators, alphanumeric text, lights, and the like. Display 114 may receive a position signal (or signals) and generate a viewable image or annunciator in response to the position signal. In this context, the position signal may be representative of position information that has been obtained and processed by processor 106.

Avionics data 110 includes standard information related to the state of the aircraft. Data sources 108 include various types of data required by the system, for example, flight plan data, data related to airways, navigational aids (Navaids), symbol textures, navigational data, obstructions, font textures, taxi registration, Special, Use Airspace, political boundaries, COM frequencies (enroute and airports), approach info, and the like. Monitor 112 may include any display monitor suitable for displaying the various symbols and information detailed below. Many currently known monitors are suitable for this task, including various CRT and flat-panel display systems. In an exemplary embodiment, display element 112 includes a primary flight display (PFD) 114, as shown in Figure 4, with various annunciators.

Many of the prior art annunciators are distributed throughout the cockpit. For example, the waypoints (physical locations, navigation sources and/or the like in the flight plan) are typically located on a map which is displayed on the MFD (Multifunction Display) area which is usually located in a separate display adjacent to the PFD and the CDU which are themselves usually located in the pedestal area of the cockpit. Moreover, the targets are usually located on their respective scales (speed, altitude, vertical speed, heading, etc.) which are in the PFD (Speed is usually directly to the left of the ADI, Altitude is usually to the right of the ADI, and Vertical Speed is usually in the HSI area or to the right of the Altitude scale) and/or on a Flight Guidance Controller located in the glareshield area of the cockpit.

In accordance with various embodiments of the present invention, vertical profile 204 generally includes a side-view aircraft symbol 208(b), one or more waypoint symbols 212(b) (or constraint symbols, described in detail below), line segments 209(a) connecting waypoint symbols 212(b), a first axis 218 representing lateral position and/or time, and a second axis 216 designating altitude. As with the lateral view 202, the system is preferably configured such that the user may modify the flight plan and trajectory via graphical manipulation of symbols 212(b) using cursor symbol 210.

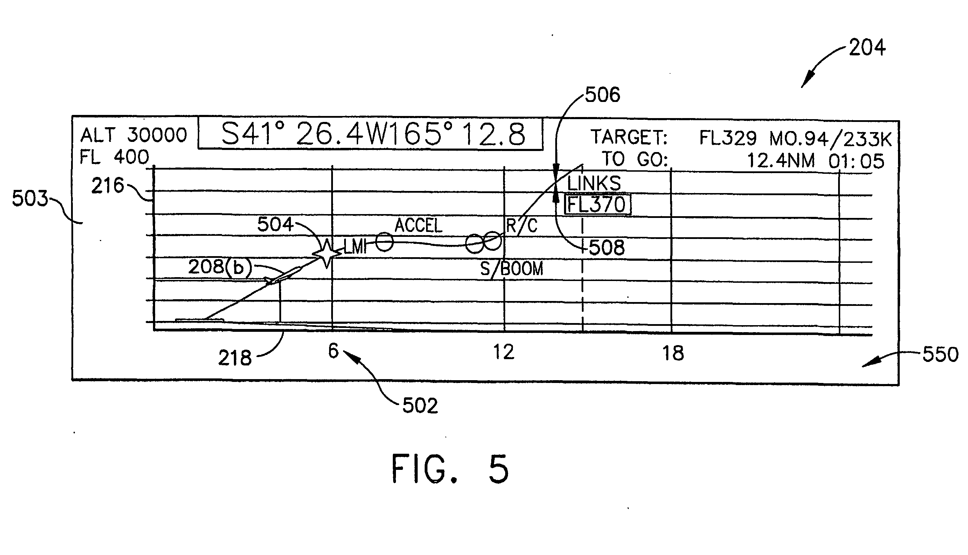

Referring now to Figure 5, an exemplary vertical profile 204 includes vertical axis 216 graduated with altitude values 503 and a lateral axis 218 graduated with lateral distance values (e.g., nautical miles). Alternatively, time values 502 may be displayed in place of or in addition to lateral distance values 502. Aircraft symbol 208(b) is shown having an orientation roughly equivalent to the orientation of the actual aircraft, and the various waypoints are shown via a waypoint symbol 504 or, where altitude constraints are selected, by upper or lower limit symbols (506 and 504 respectively). Lateral axis 218 is preferably scaled such that it corresponds to the scale of lateral view 202. More particularly, the maximum value 550 of lateral axis 218 is preferably equal to the range specified in the lateral view.

Referring again to Figure 4, lateral view 202 suitably includes various graphical elements ("symbols") representing, among other things, the lateral position of the aircraft with respect to the ground. The lateral view 202 also may include various map features, including terrain, political boundaries, and the like. In the illustrated embodiment, lateral view 202 includes a top view aircraft symbol 208(a), one or more waypoint symbols 212(a), and line segments 209(a) connecting the waypoint symbols 208(a), wherein the waypoint symbols 212(a) are associated with the current flight-path of the aircraft. Display 114 also preferably includes cursor symbol 210 positioned in accordance with input from user 102 received via cursor control device 104. While the details of the user's interaction with the various views can be found in U.S. Patent Application Serial No. 09/660,343, in general, cursor 210 is suitably positioned by the user in order to select and graphically edit the flight plan associsted with various active waypoints.

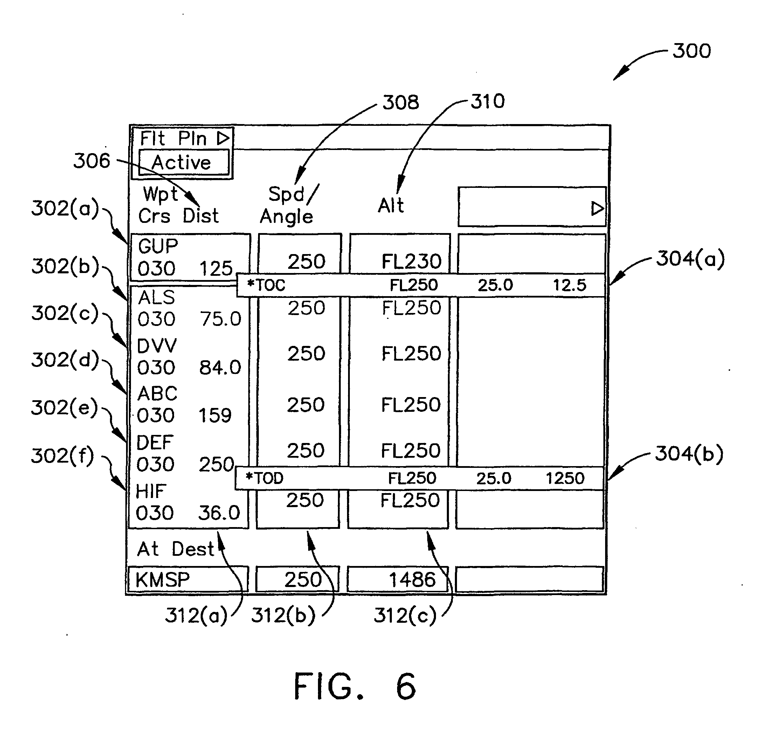

Referring now to Figure 6, an exemplary embodiment of flight plan text display 300 is illustrated. Flight plan display 300 preferably comprises a region, similar to lateral view 202 and vertical profile view 204 (Figure 4) which suitably comprise representations of various flight data. Preferably those representations are textual, but likewise may comprise other means of representations such as graphical. In the present exemplary embodiment, flight plan waypoints 302 of the selected flight plan, non-flight plan waypoints 304(a), 304(b) and corresponding information such as cruise distance 306, speed/angle 308 and altitude 310 are displayed. In accordance with alternative aspects of the present invention, however, any information which can be displayed can be presented in display 300. For example, information relating to fuel, wind speed, temperature, air craft status or mode and the like could likewise be displayed.

In accordance with the present invention, as mentioned above, non-flight plan data 304a,b is displayed in display 300. In the present embodiment, non-flight plan data 304a,b comprises TOC and TOD, but, as mentioned above, may comprise other non-flight plan data such as Step Climb, and the like. Preferably, non-flight plan data 304a,b is distinguished and/or distinct from flight plan waypoint 302 such that non-flight plan data 304a,b is less likely to be confused with waypoint data 302. For example, in the present embodiment, non-flight plan data 304 is offset and superimposed from waypoint data 302 (e.g., non-flight plan data 304 is not within arrays 312). However, other techniques for distinguishing non-flight plan data 304 may also be employed and fall within the scope of the present invention. For example, non-flight plan data 304 may be superimposed and of a different color than waypoint data 302, might flash or brink, may be indented relative to waypoint data 302, may, be listed in a separate array (not shown) or other distinguishing manner.

Additionally, in accordance with the present invention, non-flight plan data 304a,b is preferably positionally located to provide convenience to the pilot or user. For example, in the present embodiment, data relating to TOC 304a and TOD 304b are located between flight plan waypoints 302 based upon chronological occurrence. That is to say because TOC 304a occurs after waypoint 302a, but before waypoint 302b, TOC 304a is positioned near or between waypoints 304a and 304b. Similarly, because TOD 304b occurs after waypoint 302e, but before waypoint 302f, TOD 304b is positioned near or between waypoints 304e and 304f.

Additionally, textual information shown in display 300 is listed in a vertical arrays 312(a-c). For example, in the illustrated embodiment, array 312(a) corresponds to cruise distance 306, array 312(b) corresponds to speed/angle 308 and array 312(c) corresponds to altitude 310. Arrays 312(a-c) contain waypoint data which is preferably organized in a manner intuitive to the pilot. For example, in the present exemplary embodiment, waypoints 302 are arranged chronologically from a first in time waypoint at an upper end of the array to a last in time waypoint at a lower end. Of course, it should be appreciated that in alternative embodiments, other configurations of arranging the information shown in display may likewise be used and may likewise be adapted based on the pilot's preference or for changing conditions.

In accordance with the present invention, in contrast to waypoints 302 which are interactive to the user through, for example, the cursor, non-flight plan data 304 is non-interactive, further distinguishing waypoints 302 and non-flight plan data 304. For example, non-flight plan data 304 is not selectable as a target for graphical flight planning operations and/or flight plan associated constraints.

Generally, one skilled in the art will appreciate that processor 106 and various functional components of processor 106 may include and/or cooperate with various existing or developed software programs known in flight management systems or instructions designed to process tasks, calculations, control functions associated with the generation of flight plan and non-flight plan display signals in flight plan text display 300. For example, in an exemplary embodiment, processor 106 may be configured to generate a signal which corresponds to the same signals which provide TOD, TOC, Step Climb or other flight plan or non-flight plan data to CDU, though the signal may be generated in other known processing steps such as by shadow processing (a process parallel to the FMS), a separate set of processing algorithms and the like. The signal is suitably processed by processor 106 such that flight plan waypoints, are displayed in display 300 such that they are selectable by cursor control 104 for modification and the like, while non-flight plan data is displayed in display 300 such that it is not modifiable by selection by interactive cursor control 104, but rather are fixed by the FMS, preprogrammed settings or the like.

As mentioned briefly above, systems in accordance with the present invention preferably provide the ability to graphically modify and/or enter flight-plan information via the cursor-control device. For example, with reference now to Figure 4, when the user clicks a particular such as waypoiht 212(a), waypoint 212(a) is suitably highlighted to indicated that it has been selected (in this case, by a diamond-shaped outline), and various flight plan and non-flight plan modification options are presented an/or can performed without distracting the pilot's attention or eyes from display 114.

Thus, displays in accordance with the present invention provide more efficient control and display of information and the vehicle operator is preferably provided with more accurate and timely information to monitor vehicle behavior and direct overall vehicle operations. Accordingly, the operator is better able to make informed decisions, resulting in improved vehicle performance and safety.

## Claims

1. A system (100) for displaying non-flight plan waypoint information, comprising:
a primary flight display unit (114) having a flight plan data display area divided into at least one array (312);
a processor coupled to said primary flight display unit, said processor configured to process avionics data and produce flight plan data (302) and non-flight plan data (304) on said primary flight display unit, wherein said non-flight plan data is distinct from said flight plan data,
**characterised in that** said non-flight plan data is superimposed on said at least one array.

2. The system of claim 1, wherein said at least one array (312) contains said flight plan data (302).

3. The system of claim 2, wherein said flight plan data (302) is arranged chronologically in said at least one array (312).

4. The system of claim 2, wherein said non-flight plan data (304) is positioned chronologically with respect to said flight plan data (302).

5. The system of claim 2, wherein said non-flight plan data (304) is indented in relation to said flight plan data (302).

6. The system of claim 1, wherein said non-flight plan data (304) is a top of climb waypoint (304(a)).

7. The system of claim 1, wherein said non-flight plan data (304) is a top of descent waypoint (304(b)).

8. The system of claim 1, wherein said non-flight plan data (304) is a step climb waypoint.

9. The system of claim 1, wherein said non-flight plan data (304) is non-interactive.

10. A method for displaying non-flight plan waypoint information, comprising:
providing a primary flight display unit (114) having a flight plan data display area divided into at least one array (312);
processing avionics data provided by a Flight Management System to generate a flight plan signal indicative of a flight plan data (302) and a non-flight plan signal indicative of a non-flight plan data (304);
sending said flight plan signal and said non-flight plan signal to said primary flight display unit;
displaying said flight plan data and non-flight plan data on said primary flight display unit, wherein said non-flight plan data is distinct from said flight plan data,
**characterised in that** the method further comprises superimposing said non-flight plan data on said at least one array.

11. The method of claim 10, wherein said at least one array (312) contains said flight plan data (302).

12. The method of claim 10, wherein said non-flight plan data (304) is presented outside said at least one array (312).

13. The method of claim 10, further comprising the step of chronologically arranging said flight plan data (302) in said at least one array (312).

14. The method of claim 10, further comprising the step of chronologically arranging said non-flight plan data (304) with respect to said flight plan data (302).

15. The method of claim 10, wherein said non-flight plan data (304) is indented in relation to said flight plan data (302).

16. The method of claim 10, wherein said non-flight plan data (304) is a top of climb waypoint (304(a)).

17. The method of claim 10, wherein said non-flight plan data (304) is a top of descent waypoint (304(b)).

18. The method of claim 10, wherein said non-flight plan data (304) is a step climb waypoint.

19. The method of claim 10, wherein said non-flight plan data (304) is non-interactive.

## Patentansprüche

1. System (100) zur Darstellung von nicht im Flugplan vorgesehenen Zwischenpunktinformationen mit folgendem:
eine Primärfluganzeigeeinheit (114) mit einem in mindestens ein Feld (312) eingeteilten Flugplandatenanzeigebereich;
einem an die Primärfluganzeigeeinheit angekoppelten Prozessor zu verarbeiten von Avionikdaten und Erzeugen von Flugplandaten (302) und nicht im Flugplan vorgesehenen Daten (304) auf der Primärfluganzeigeeinheit, wobei sich die nicht im Flugplan vorgesehenen Daten von den Flugplandaten unterscheiden, **dadurch gekennzeichnet, daß** die nicht im Flugplan vorgesehenen Daten in das mindestens eine Feld eingeblendet sind.

2. System nach Anspruch 1, wobei das mindestens eine Feld (312) die Flugplandaten (302) enthält.

3. System nach Anspruch 2, wobei die Flugplandaten (302) in zeitlicher Reihenfolge in dem mindestens einen Feld (312) angeordnet sind.

4. System nach Anspruch 2, wobei die nicht im Flugplan vorgesehenen Daten (304) in zeitlicher Reihenfolge bezüglich der Flugplandaten (302) positioniert sind.

5. System nach Anspruch 2, wobei die nicht im Flugplan vorgesehenen Daten (304) im Verhältnis zu den Flugplandaten (302) eingerückt sind.

6. System nach Anspruch 1, wobei die nicht im Flugplan vorgesehenen Daten (304) ein Steigflugspitzen-Zwischenpunkt (304(a)) sind.

7. System nach Anspruch 1, wobei die nicht im Flugplan vorgesehenen Daten (304) ein Sinkflugspitzen-Zwischenpunkt (304(b)) sind.

8. System nach Anspruch 1, wobei die nicht im Flugplan vorgesehenen Daten (304) ein Stufensteigflug-Zwischenpunkt sind.

9. System nach Anspruch 1, wobei die nicht im Flugplan vorgesehenen Daten (304) nicht dialogfähig sind.

10. Verfahren zur Darstellung von nicht im Flugplan vorgesehenen Zwischenpunktinformationen, mit folgenden Schritten:
Bereitstellen einer Primärfluganzeigeeinheit (114) mit einem in mindestens ein Feld (312) eingeteilten Flugplandatenanzeigebereich;
Verarbeiten von durch ein Flugleitsystem bereitgestellten Avionikdaten zum Erzeugen eines Flugplandaten (302) anzeigenden Flugplansignals und eines nicht im Flugplan vorgesehene Daten (304) anzeigenden nicht-Flugplansignals;
Senden des Flugplansignals und des nicht-Flugplansignals zu der primären Fluganzeigeeinheit;
Darstellen der Flugplandaten und nicht im Flugplan vorgesehenen Daten auf der primären Fluganzeigeeinheit, wobei sich die nicht im Flugplan vorgesehenen Daten von den Flugplandaten unterscheiden, **dadurch gekennzeichnet, daß** das Verfahren weiterhin das Einblenden der nicht im Flugplan vorgesehenen Daten in mindestens ein Feld umfaßt.

11. Verfahren nach Anspruch 10, wobei das mindestens eine Feld (312) die Flugplandaten (302) enthält.

12. Verfahren nach Anspruch 10, wobei die nicht im Flugplan vorgesehenen Daten (304) außerhalb des mindestens einen Feldes (312) dargestellt werden.

13. Verfahren nach Anspruch 10, weiterhin mit dem Schritt des Anordnens der Flugplandaten (302) in zeitlicher Reihenfolge in mindestens einem Feld (312).

14. Verfahren nach Anspruch 10, weiterhin mit dem Schritt des Anordnens der nicht im Flugplan vorgesehenen Daten (304) in zeitlicher Reihenfolge bezüglich der Flugplandaten (302).

15. Verfahren nach Anspruch 10, wobei die nicht im Flugplan vorgesehenen Daten (304) in bezug auf die Flugplandaten (302) eingerückt sind.

16. Verfahren nach Anspruch 10, wobei die nicht im Flugplan vorgesehenen Daten (304) ein Steigflugspitzen-Zwischenpunkt (304(a)) sind.

17. Verfahren nach Anspruch 10, wobei die nicht im Flugplan vorgesehenen Daten (304) ein Sinkflugspitzen-Zwischenpunkt (304(b)) sind.

18. Verfahren nach Anspruch 10, wobei die nicht im Flugplan vorgesehenen Daten (304) ein Stufensteigflug-Zwischenpunkt sind.

19. Verfahren nach Anspruch 10, wobei die nicht im Flugplan vorgesehenen Daten (304) nicht dialogfähig sind.

## Revendications

1. Système (100) pour afficher des informations de points de cheminement d'un plan autre qu'un plan de vol, comprenant :
une unité d'affichage de vol principale (114) ayant une zone d'affichage de données de plan de vol divisée en au moins un tableau (312);
un processeur couplé à ladite unité d'affichage de vol principale, ledit processeur étant configuré pour traiter des données d'avionique et produire des données de plan de vol (302) et des données d'un plan autre qu'un plan de vol (304) sur ladite unité d'affichage de vol principale, lesdites données d'un plan autre qu'un plan de vol étant distinctes desdites données de plan de vol,
**caractérisé en ce que** lesdites données d'un plan autre qu'un plan de vol sont superposées sur ledit au moins un tableau.

2. Système selon la revendication 1 dans lequel ledit au moins un tableau (312) contient lesdites données de plan de vol (302).

3. Système selon la revendication 2 dans lequel lesdites données de plan de vol (302) sont disposées chronologiquement dans ledit au moins un tableau (312).

4. Système selon la revendication 2 dans lequel lesdites données d'un plan autre qu'un plan de vol (304) sont positionnées chronologiquement par rapport auxdites données de plan de vol (302).

5. Système selon la revendication 2 dans lequel lesdites données d'un plan autre qu'un plan de vol (304) sont en retrait par rapport auxdites données de plan de vol (302).

6. Système selon la revendication 1 dans lequel lesdites données d'un plan autre qu'un plan de vol (304) sont un point de cheminement de fin de montée (304(a)).

7. Système selon la revendication 1 dans lequel lesdites données d'un plan autre qu'un plan de vol (304) sont un point de cheminement de début de descente (304(b)).

8. Système selon la revendication 1 dans lequel lesdites données d'un plan autre qu'un plan de vol (304) sont un point de cheminement de montée par paliers.

9. Système selon la revendication 1 dans lequel lesdites données d'un plan autre qu'un plan de vol (304) sont non interactives.

10. Procédé d'affichage d'informations de points de cheminement d'un plan autre qu'un plan de vol, comprenant :
la mise à disposition d'une unité d'affichage de vol principale (114) ayant une zone d'affichage de données de plan de vol divisée en au moins un tableau (312);
le traitement de données d'avionique fournies par un système de gestion de vol pour générer un signal de plan de vol indicatif de données de plan de vol (302) et un signal d'un plan autre qu'un plan de vol indicatif de données d'un plan autre qu'un plan de vol (304);
l'envoi dudit signal de plan de vol et dudit signal d'un plan autre qu'un plan de vol à ladite unité d'affichage de vol principale;
l'affichage desdites données de plan de vol et données d'un plan autre qu'un plan de vol sur ladite unité d'affichage de vol principale, lesdites données d'un plan autre qu'un plan de vol étant distinctes desdites données de plan de vol,
**caractérisé en ce que** le procédé comprend en outre la superposition desdites données d'un plan autre qu'un plan de vol sur ledit au moins un tableau.

11. Procédé selon la revendication 10 dans lequel ledit au moins un tableau (312) contient lesdites données de plan de vol (302).

12. Procédé selon la revendication 10 dans lequel lesdites données d'un plan autre qu'un plan de vol (304) sont présentées à l'extérieur dudit au moins un tableau (312).

13. Procédé selon la revendication 10 comprenant en outre l'étape de disposer chronologiquement lesdites données de plan de vol (302) dans ledit au moins un tableau (312).

14. Procédé selon la revendication 10 comprenant en outre l'étape de disposer chronologiquement lesdites données d'un plan autre qu'un plan de vol (304) par rapport auxdites données de plan de vol (302).

15. Procédé selon la revendication 10 dans lequel lesdites données d'un plan autre qu'un plan de vol (304) sont en retrait par rapport auxdites données de plan de vol (302).

16. Procédé selon la revendication 10 dans lequel lesdites données d'un plan autre qu'un plan de vol (304) sont un point de cheminement de fin de montée (304(a)).

17. Procédé selon la revendication 10 dans lequel lesdites données d'un plan autre qu'un plan de vol (304) sont un point de cheminement de début de descente (304(b)).

18. Procédé selon la revendication 10 dans lequel lesdites données d'un plan autre qu'un plan de vol (304) sont un point de cheminement de montée par paliers.

19. Procédé selon la revendication 10 dans lequel lesdites données d'un plan autre qu'un plan de vol (304) sont non interactives.
